# EUROPEAN PATENT APPLICATION

(11) **EP 1 995 890 A2**
(43) Date of publication of application: **26.11.2008**
(21) Application number: 08155045.1
(22) Date of filing: 23.04.2008
(51) Int. Cl.: H04B 7/185

(54) **System and method of communicating and re-using frequencies within terrestrial and satellite signal paths**

(30) Priority: 21.05.2007 US 804961
(71) Applicant: Delphi Technologies, Inc., Troy, Michigan 48007 (US)
(72) Inventor: Fruit, Larry J., Kokomo, IN 46902 (US); Walker, Glenn A., Greentown, IN 46936 (US)
(74) Representative: Denton, Michael John

(57) **Abstract**

A system (10) and method (50) for communicating and re-using frequencies is provided, which includes a source provider (12), at least one transmitter, and a plurality of antennas. The transmitter transmits source data along a plurality of signal paths including a first signal at a first frequency transmitted along a first satellite signal path (14), a second signal at a second frequency transmitted along a second satellite signal path (16), and a terrestrial signal transmitted along a terrestrial signal path (18). The terrestrial signal frequency is substantially the same as one of the first and second signal frequencies. The antennas receive signals, and include a first antenna (20) for receiving at least the terrestrial signal along the terrestrial signal path (18) and a second antenna (22) for receiving at least the first signal along the first satellite signal path (14), the second signal along the second satellite signal path (16), and the terrestrial signal along the terrestrial signal path (18).

## Description

### Technical Field

The present invention generally relates to a digital satellite radio system, and more particularly, a system and method of efficiently broadcasting digital satellite radio signals within satellite and terrestrial signal paths.

### Background of the Invention

There are a limited number of available frequencies for wirelessly transmitting data, and thus, the frequency bandwidths that are available for communication purposes are also limited. Since additional frequencies cannot be created, which would allow for additional communication, the available frequencies must be efficiently used. In the current European satellite radio systems, there are twenty-three (23) contiguous frequencies designated across forty megahertz (40 MHz), where only seven frequencies are designated for hybrid systems. Generally, hybrid systems include transmissions being broadcast using satellites and terrestrial transponders or terrestrial repeaters. The current European satellite radio system is constrained to frequency bandwidths of 1.712 MHz.

Generally, the European satellite radio system uses satellites to broadcast the service information and terrestrial repeaters that also broadcast the service information so that areas with poor or no satellite reception receive the service information. Typically, Phase Modulation (PM) or Complex Orthogonal Frequency Division Modulation (COFDM) signals are transmitted from the satellite and terrestrial repeater.

Satellites typically have either geostationary orbits (GEO) or highly elliptical orbits (HEO) in order to provide a service to a particular geographic area on the Earth. The satellite transmissions require a given amount of bandwidth and the terrestrial repeaters require additional non-overlapping bandwidth in order to deliver the service information. The amount of bandwidth typically required can be dependent upon the type of service information that is being broadcast. Thus, the total amount of bandwidth generally necessary to provide a viable cost effective service where the satellite bandwidth and the terrestrial repeater bandwidth are not overlapping is prohibitive in many cases.

Therefore, it is desirable to develop a system and method for communicating with digital satellite and terrestrial radio signals in an efficient manner, particularly when using at least one satellite signal path and at least one terrestrial signal path.

### Summary of the Invention

According to one aspect of the present invention, a communication system for re-using frequencies includes a source provider that provides source data, at least one transmitter, and a plurality of antennas. The source data is transmitted by the at least one transmitter along a plurality of signal paths including at least a first signal at a first frequency transmitted along a first satellite signal path, a second signal at a second frequency transmitted along a second satellite signal path, and a terrestrial signal transmitted along a terrestrial signal path. The terrestrial signal frequency along the terrestrial signal path is substantially the same as one of the first and second signal frequencies along one of the first and second satellite signal paths. The plurality of antennas include at least a first antenna for receiving at least the terrestrial signal along the terrestrial signal path and a second antenna for receiving at least one of the first signal along the first satellite signal path, the second signal along the second satellite signal path, and the terrestrial signal along the terrestrial signal path.

According to another aspect of the present invention, a method of communicating and re-using frequencies includes the steps of obtaining source data, transmitting the source data over a plurality of signal paths, including at least a first signal at a first frequency transmitted along a first satellite signal path, a second signal at a second frequency transmitted along a second satellite signal path, and a terrestrial signal transmitted along a terrestrial signal path, and overlapping one of the first and second satellite signal paths with the terrestrial signal path, such that the terrestrial signal frequency along the terrestrial signal path is substantially the same as one of the first and second signal frequencies along one of the first and second satellite signal paths. The method further includes the steps of receiving at least the terrestrial signal along the terrestrial signal path by a first antenna, receiving at least one of the first signal along the first satellite signal path, the second signal along the second satellite signal path, and the terrestrial signal along the terrestrial signal path by a second antenna, and emitting an output based upon the received at least one signal.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is an environmental view of a system for broadcasting and re-using frequencies in accordance with one embodiment of the present invention;
Fig. 2 is a block diagram of a system for broadcasting and re-using frequencies including a high-elevation satellite signal path and a terrestrial signal path in accordance with one embodiment of the present invention;
Fig. 3A is a flow chart illustrating a part of a method of communicating and re-using frequencies in accordance with one embodiment of the present invention; and
Fig. 3B is a flow chart illustrating an additional part of the method of communicating and re-using frequencies of Fig. 3A in accordance with an embodiment of the present invention.

### Description of the Preferred Embodiment

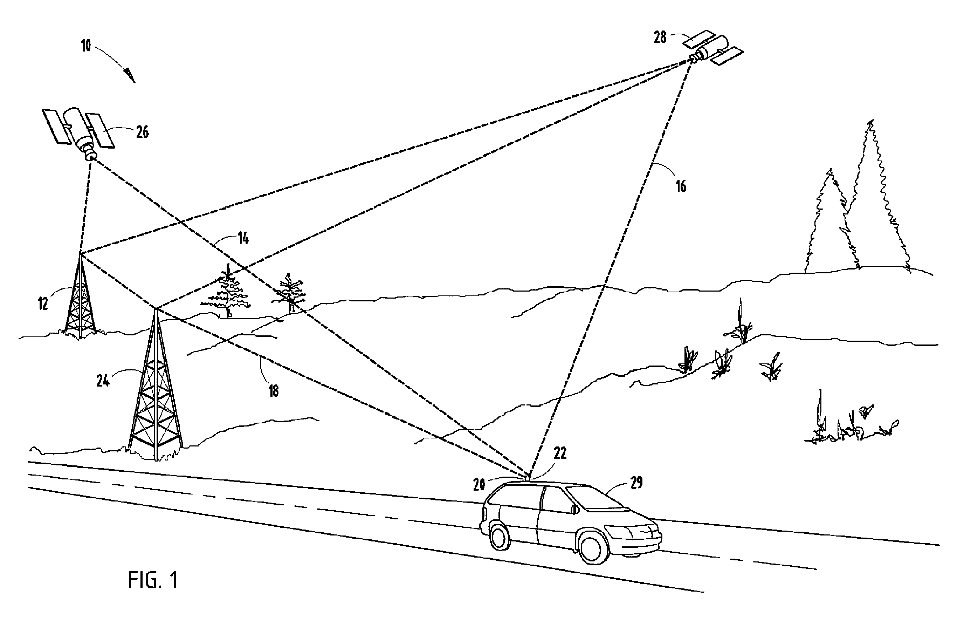

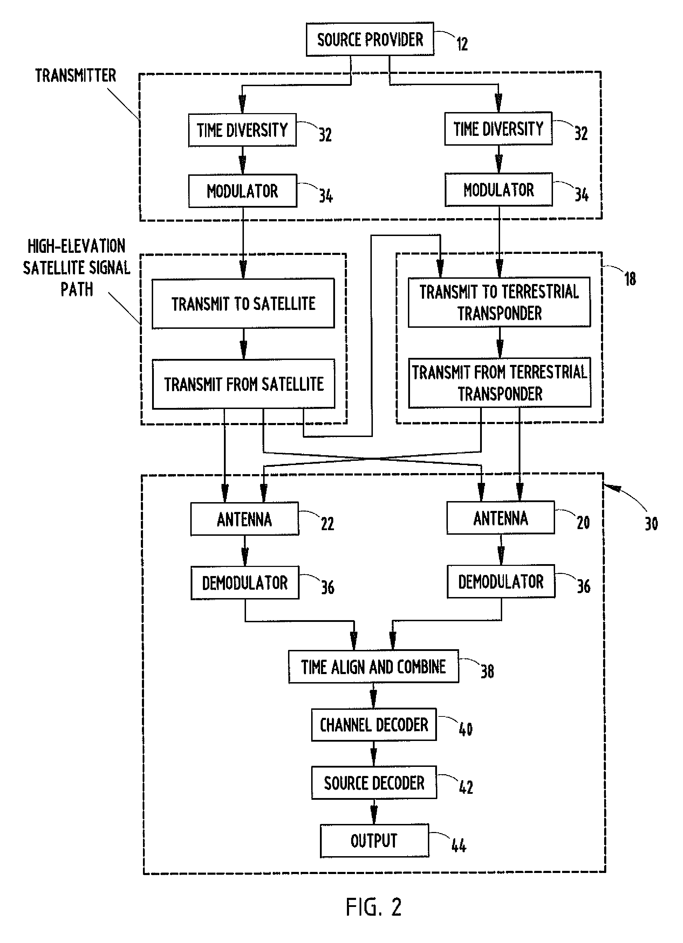

In reference to both Figs. 1 and 2, a system for broadcasting and re-using frequencies is generally shown at reference indicator 10. The system 10 includes a source provider 12 that provides source data and a plurality of signal paths for transmitting the source data. The plurality of signal paths include at least a first satellite signal path 14, a second satellite signal path 16, and a terrestrial signal path 18. A first signal at a first frequency is transmitted along the first satellite signal path 14, a second signal at a second frequency is transmitted along the second satellite signal path 16, and a terrestrial signal is transmitted along the terrestrial signal path 18. The terrestrial signal path 18 overlaps one of the first and second satellite signal paths 14,16, such that the terrestrial signal frequency along the terrestrial signal path 18 is substantially the same as one of the first and second signal frequencies along one of the first and second satellite signal paths 14,16, as described in greater detail below.

The system 10 also includes a plurality of antennas for receiving signals from the plurality of signal paths. In one embodiment, the plurality of antennas include at least a first antenna 20 for receiving a signal from low-elevations which includes at least the terrestrial signal path 18, and a second antenna 22 for receiving signals from high-elevations which includes at least one of the first and second signal paths 14,16. The terrestrial signal path 18 overlaps at least one of the first and second satellite signal paths 14,16, such that the signal transmitted along terrestrial signal path 18 is transmitting on the same frequency and bleeds into the signal along one of the first and second satellite signal paths 14,16 under certain conditions. Thus, the second antenna 22 can receive signals from the first signal path 14, the second signal path 16, terrestrial signal path 18, and a combination thereof.

By transmitting the terrestrial signal at the same frequency as one of the first and second signals, the terrestrial signal overlaps one of the first and second signals and the frequency is being re-used. Re-using the frequency, such that the terrestrial signal and one of the first and second signals being transmitted at the same frequency, allows for an efficient use of the frequency spectrum since the terrestrial signal, the first signal, and the second signal are not being transmitted at three different frequencies.

The terrestrial signal path 18 includes a terrestrial transponder 24 that receives data from the source provider 12, the high-elevation satellite, or a combination thereof. Thus, the source provider 12 transmits the source data using a terrestrial radio frequency (RF) signal along the terrestrial signal path 18. The first satellite signal 14 is associated with a first satellite 26, and second satellite signal path 16 is associated with a second satellite 28. In one embodiment, the signals along the first and second satellite signal paths 14,16 are digital satellite radio frequency (RF) signals, and the terrestrial signal path 18 overlaps one of the first and second satellite signal paths 14,16 based upon which of the first and second satellites 26,28 have the highest elevation angle with respect to the first and second antennas 20,22.

By way of explanation and not limitation, the antennas are mounted on a mobile vehicle 29 (e.g., automobile), such that the antennas 20,22 are substantially stationary on the vehicle 29 in the mounted position, and the position of the antennas 20,22 with respect to the satellite signal paths 14,16 and the terrestrial signal path 18 can be approximately predicted. In one embodiment, the first and second satellites 26,28 are HEO satellites that are in the same orbital path, such that one of the first and second satellites 26,28 is at a higher elevation angle with respect to the first and second antennas 20,22 than the other, depending upon where the satellites 26,28 are in the orbital path. It should be appreciated by those skilled in the art that the antennas 20,22 can be used on a mobile device that is not mounted to the vehicle 29, but the reception of the signals by the antennas 20,22 may be less predictable due to the possibility of the position of the antennas 20,22 with respect to the signal paths 14,16,18 being less predictable when the antennas 20,22 are mounted on the vehicle 29.

According to the exemplary embodiment, the first antenna 20 is a low-elevation antenna, and the second antenna 22 is a high-elevation antenna. Thus, the first antenna 20 receives signals that are at a low-elevation angle, and rejects signals that are at a high-elevation angle. The second antenna 22 receives signals from a high-elevation angle, and rejects signals from a low-elevation angle. Typically, the first antenna 20 is configured to receive signals from the low-elevation angle signal paths that are at approximately twenty degrees or less with respect to the first antenna 20, and the second antenna 22 is configured to receive signals from the high-elevation signal paths that are approximately seventy degrees or more with respect to the second antenna 22. Thus, there is separation of the signals from the first satellite signal path 14, the second satellite signal path 16, and the terrestrial signal path 18. Typically, the antennas 20,22 achieve eight decibels (dB) at five degrees of separation, however, the achievable separation can be dependent upon the design of the antenna, the installation of the antenna, the like, or a combination thereof.

In one embodiment, the source data is transmitted in spatial diversity among the first and second satellite signal paths 14,16 and the terrestrial signal path 18. Signals are transmitted in spatial diversity when multiple signal paths are used that are at different elevations with respect to the receiver of the signals. By way of explanation and not limitation, if the first satellite signal path 14 is the high-elevation signal path and the second satellite signal path 16 is the low-elevation signal path, and the source data is transmitted along both the first and second satellite signal paths 14,16, then the source data is transmitted using spatial diversity. Transmitting the source data in spatial diversity increases the probability that at least one of the signals transmitted along the first and second satellite signal paths 14,16 and the terrestrial signal path 18 will be received since the signal paths 14,16,18 are at different elevation angles, than if the source data was transmitted at only a single elevation angle.

The system 10 further includes a receiver generally indicated at reference indicator 30 that is in communication with at least one of the first and second antennas 20,22. The receiver 30 emits an output based upon the signals received from the signal paths 14,16,18. Thus, the output emitted by the receiver 30 is based upon the signals along the highest-elevation satellite of the first and second satellites 26,28 and the terrestrial signal path 18 when the receiver 30 is in a strong terrestrial area. A strong terrestrial area is where the terrestrial signal in the terrestrial signal path 18 is very strong. The terrestrial signal in the terrestrial signal path 18 bleeds into the signal path of the lower-elevation satellite of the first and second satellites 26,28, which are transmitting on the same frequency. Since the terrestrial signal path 18 typically has half the bandwidth of the satellite signal paths 14,16, the receiver 30 is still able to receive a signal from the higher-elevation satellite.

The receiver 30 emits an output based upon the signals received from the first and second satellite signal paths 14,16 when the receiver 30 is in a weak terrestrial area. A weak terrestrial area is where the terrestrial signals in the terrestrial signal path 18 are weak, and signals from both the first satellite signal path 14 and second satellite signal path 16 can be received by the high-elevation antenna of the first and second antennas 20,22. Further, the receiver 30 emits an output based upon signals received from one of the first and second satellite signal paths 14,16, which is associated with the high-elevation satellite of the first and second satellites 26,28, and the terrestrial signal path 18 when the receiver 30 is in an intermediate terrestrial area. An intermediate terrestrial area is where the terrestrial signal in the terrestrial signal path 18 has adequate strength to be received by the first antenna 20, but does not completely bleed into the signal path of the low-elevation satellite, such that the high-elevation antenna can separate the terrestrial signal and the signal from the high-elevation and low-elevation satellites.

The source provider 12 obtains source data and can use a time diversity device 32 to format the source data into a time diversity format. Typically, the time diversity format includes a forward error correction (FEC) rate, where redundant information is sent. The receiver 30 can then detect and correct the errors using the FEC rate without sending a transmission back to the source provider 12, which thus limits the bandwidth being used. The source data can be transmitted in the time diversity format in order to transmit the same information over multiple signals that are received by the receiver 30 at different times, and thus, increase the probability that the receiver 30 will receive the transmitted data. Such a transmission is beneficial, especially when the receiver 30 is mobile. The signals are then modulated by a modulator 34. It should be appreciated by those skilled in the art that any suitable signal modulation can be used to modulate the signals.

In one embodiment, the time diversity device 32 and the modulator 34 can be included in a transmitter. It should be appreciated by those skilled in the art that the signal transmitted along the low-elevation satellite path also begins at the source provider 12 and passes through the time diversity device 32 and modulator 34, which can also be included in the transmitter, and then continues through the low-elevation satellite and to the receiver 30. It should further be appreciated by those skilled in the art that the transmitter and receiver 30 can include other desirable devices and/or circuitry for processing the signals that are transmitted and received.

When the receiver 30 receives the signals from the first satellite 26, second satellite 28, terrestrial transponder 24, or a combination thereof, the signals are demodulated by a demodulator 36. A time align and combine device 38 is then used to time align the signals from the time diversity format and combine the selected signals. Thus, the device 38 can select the signals from the first satellite 26, second satellite 28, terrestrial transponder 24, or a combination thereof that are received by the receiver 30. A channel decoder 40 is typically used to channel decode the signal. Likewise, a source decoder 42 is used to decode the received signals. An output 44 is emitted by the receiver based upon the signals received from the first satellite signal path 14, second satellite signal path 16, terrestrial signal path 18, or a combination thereof.

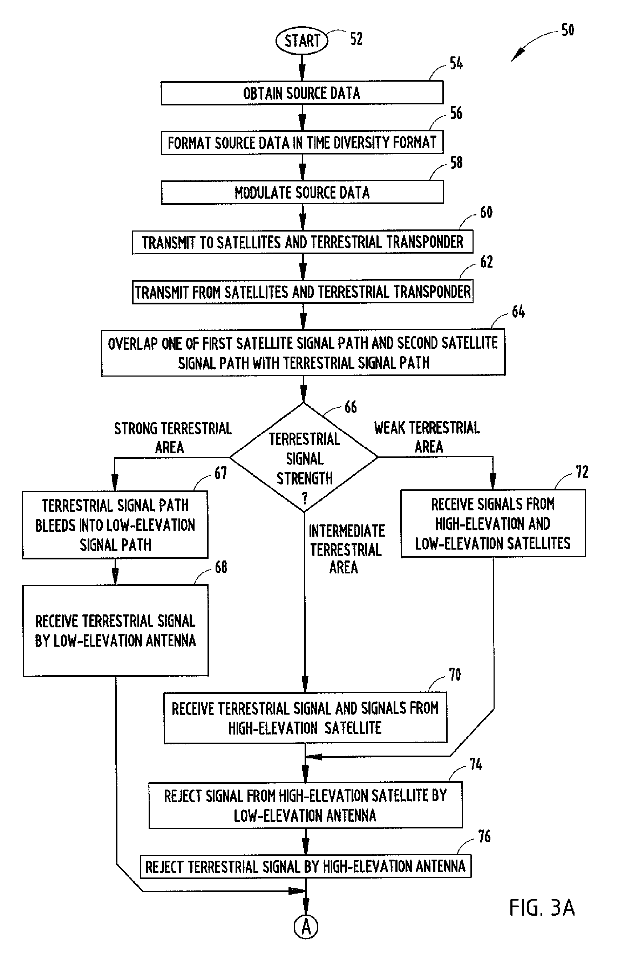

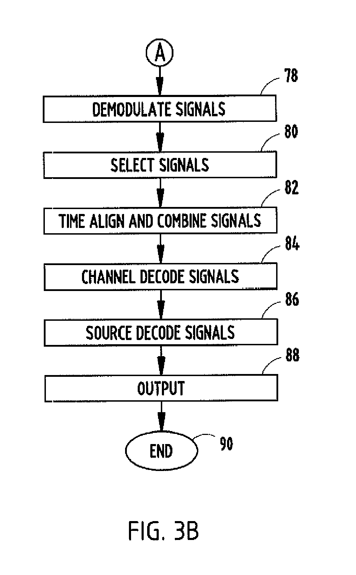

In reference to Fig. 3, a method of broadcasting and re-using frequencies is generally shown at 50. The method 50 begins at step 52, and proceeds to step 54 where source data is obtained. The source data is formatted into a time diversity format at step 56, and the source data is modulated at step 58. At step 60, the source data is transmitted to the first satellite 26, second satellite 28, and terrestrial transponder 24. The signals are then simultaneously transmitted from the first satellite 26, second satellite 28, and terrestrial transponder 24, at step 62.

At step 64, the terrestrial signal path 18 overlaps one of the first satellite signal path 14 and the second satellite signal path 16. At decision step 66, the terrestrial signal strength is determined. If the terrestrial signal strength is strong, such that the antennas 20,22 and receiver 30 are in a strong terrestrial area, then the method 50 proceeds to step 67, where the terrestrial signal path 18 bleeds into the low-elevation signal path. Thus, due to the signal in the low-elevation signal path and the signal in the terrestrial signal path 18 being transmitted in the same frequency and the terrestrial signal being so strong, the antennas 20,22 cannot achieve separation of the signals. At step 68, the receiver 30 receives the terrestrial signal from the terrestrial signal path 18 by the low-elevation antenna. Generally, since the antennas 20,22 cannot achieve separation due to the strength of the terrestrial signal, the terrestrial signal can be received by both antennas 20,22.

If it is determined at decision step 66 that the terrestrial signal strength is intermediate, such that the antennas 20,22 and receiver 30 are in an intermediate terrestrial area, then the method 50 proceeds to step 70, where the receiver 30 receives the terrestrial signal from the terrestrial signal path 18 and signals from the high-elevation satellite. However, if at decision step 66, it is determined that the terrestrial signal strength is weak, such that the antennas 20,22 and receiver 30 are in a weak terrestrial area, then the method 50 proceeds to step 72, where the receiver 30 receives signals from the high-elevation and low-elevation satellites. It should be appreciated by those skilled in the art that the terrestrial signal strength is determined by the signals that the antennas 20,22 can receive based upon the elevation angle of the signal path, the strength of the signals in the signal path, and the overlapping of the frequencies of the signals in the signal path, according to one embodiment.

The method 50 proceeds from steps 70 and 72 to step 74, where the low-elevation or first antenna 20 rejects signals transmitted from the high-elevation satellite. At step 76, the high-elevation or second antenna 22 rejects the signal in the terrestrial signal path 18. The method 50 proceeds from steps 68 and 76 to step 78, where the received signals are demodulated. At step 80, the desired signals are selected, and at step 82, the signals are time aligned and combined. At step 84, the signals are channel decoded, and at step 86, the channel decoded signals are source decoded to provide an audio and/or video output based upon the source data that is emitted by the receiver at step 88. The method 50 ends at step 90.

Advantageously, the system 10 and method 50 re-use frequencies by having the low-elevation satellite and the terrestrial signal path 18 transmitting on the same frequency. Thus, when the receiver 30 is in a weak terrestrial area, the receiver 30 receives signals from the high-elevation satellite and the low-elevation satellite. However, when the receiver 30 is in a strong terrestrial area, the terrestrial signal in the terrestrial signal path 18 bleeds into the satellite signal path of the low-elevation satellite, such that the receiver 30 receives signals from the terrestrial signal path 18. This results in the frequencies being re-used, and a more efficient use of the frequency spectrum than if the signals in the signal paths 14,16,18 are all transmitted on different frequencies while transmitting the signals in a spatial diversity format. Further, since the antennas 20,22 receive signals from predetermined elevation angles, the antennas 20,22 can be mounted on a substantially stable device, such as the vehicle 29, so that the elevation angles will substantially be the same as the vehicle is mobile.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A communication system (10) for re-using frequencies comprising:
a source provider (12) that provides source data;
at least one transmitter, wherein said source data is transmitted by said at least one transmitter along a plurality of signal paths including at least a first signal at a first frequency transmitted along a first satellite signal path (14), a second signal at a second frequency transmitted along a second satellite signal path (16), and a terrestrial signal transmitted along a terrestrial signal path (18), wherein a frequency of said terrestrial signal along said terrestrial signal path (18) is substantially the same as one of said first and second signal frequencies along one of said first and second satellite signal paths (14,16); and
a plurality of antennas that receive signals from said plurality of signal paths including at least a first antenna (20) for receiving at least said terrestrial signal along said terrestrial signal path (18) and a second antenna (22) for receiving at least one of said first signal along said first satellite signal path (14), said second signal along said second satellite signal path (16), and said terrestrial signal from said terrestrial signal path (18).

2. The system (10) of claim 1, wherein said terrestrial signal frequency is substantially the same as one of said first signal frequency transmitted along said first satellite signal path (14) that is associated with a first satellite (26) and said second signal frequency transmitted along said second satellite signal path (16) that is associated with a second satellite (28) based upon which of said first and second satellites (26,28) have the lowest elevation angle with respect to said first and second antennas (20,22).

3. The system (10) of claim 2 further comprising at least one receiver (30) that comprises said first and second antennas (20,22), wherein said at least one receiver (30) emits an output based upon said signal received from said terrestrial signal path (18) when said at least one receiver (30) is in a strong terrestrial area.

4. The system (10) of claim 1 further comprising at least one receiver (30) that comprises at least one of said first and second antenna (20,22), wherein said at least one receiver (30) emits an output based upon said signals received from said first and second satellite signal paths (14,16) when said at least one receiver (30) is in a weak terrestrial area.

5. The system (10) of claim 1 further comprising at least one receiver (30) that comprises at least one of said first and second antenna (20,22), wherein said at least one receiver (30) emits an output based upon said signals received from said terrestrial signal path (18) and one of said first and second satellite signal paths (14,16) when said at least one receiver (30) is in an intermediate terrestrial area.

6. The system (10) of claim 1, wherein said first antenna (20) is a low-elevation antenna and said second antenna (22) is a high-elevation antenna.

7. The system (10) of claim 1, wherein said first and second satellites (26,28) are highly elliptical orbit satellites.

8. A method (50) of communicating and re-using frequencies, said method (50) comprising the steps of:
obtaining (54) source data;
transmitting (60) said source data over a plurality of signal paths including at least a first signal at a first frequency transmitted along a first satellite signal path (14), a second signal at a second frequency transmitted along a second satellite signal path (16), and a terrestrial signal transmitted along a terrestrial signal path (18);
overlapping (60) one of said first and second signals with said terrestrial signal, such that a frequency of said terrestrial signal along said terrestrial signal path (18) is substantially the same as one of said first and second signal frequencies along one of said first and second satellite signal paths (14,16);
receiving (60) at least said terrestrial signal along said terrestrial signal path (18) by a first antenna (20);
receiving (70,72) at least one of said first signal along said first satellite signal path (14), said second signal along said second satellite signal path (16), and said terrestrial signal along said terrestrial signal path (18) by a second antenna (22); and
emitting an output (88) based upon said received at least one signal.

9. The method (50) of claim 8, wherein said terrestrial signal frequency is substantially the same as one of said first signal frequency transmitted along said first satellite signal path (14) that is associated with a first satellite (26) and said second signal frequency transmitted along said second satellite signal path (16) that is associated with a second satellite (28) based upon which of said first and second satellites (26,28) have the lowest elevation angle with respect to said first and second antennas (20,22).

10. The method (50) of claim 9 further comprising the step of emitting said output (88) by a receiver (30) based upon said signal received from said terrestrial signal path (18) when said first and second antennas (20,22) are in a strong terrestrial area.

11. The method (50) of claim 8 further comprising the step of emitting said output (88) by a receiver (30) based upon said signals received from said first and second satellite signal paths (14,16) when said first and second antennas (20,22) are in a weak terrestrial area.

12. The method (50) of claim 8 further comprising the step of emitting said output (88) based upon said signals received from said terrestrial signal path (18) and one of said first and second satellite signal paths (14,16) when said first and second antennas (20,22) are in an intermediate terrestrial area.

13. The method (50) of claim 8, wherein said first antenna (20) is a low-elevation antenna and said second antenna (22) is a high-elevation antenna.

14. The method (50) of claim 13 further comprising the step of rejecting (74) said signals from said signal paths that are at high elevations by said low-elevation antenna (20), and rejecting (76) said signals from said signal paths that are at low elevations by said high-elevation antenna (22).

15. The method (50) of claim 8 further comprising the steps of:
modulating (58) said source data before transmitting (60) said modulated source data;
transmitting (60) said modulated source data in a time diversity format (56) over said plurality of signal paths;
demodulating (78) said signals received by said first and second antennas (20,22);
time aligning (82) said signals received by said first and second antennas (20,22); and
decoding (86) said signals received by said first and second antennas (20,22).

16. The method (50) of claim 8 further comprising the step of providing a first satellite (26) associated with said first satellite signal path (14) and a second satellite (28) associated with said second satellite signal path (16), wherein said first and second satellites (26,28) are highly elliptical orbit satellites.
